# EUROPEAN PATENT APPLICATION

(11) **EP 4 086 727 A1**
(43) Date of publication of application: **09.11.2022**
(21) Application number: 21172387.9
(22) Date of filing: 06.05.2021
(51) Int. Cl.: G06F 1/16, G06F 3/01, H04R 1/00

(54) **ELECTRONIC DEVICE WITH A GESTURE SENSOR AND/OR A MICROPHONE**

(71) Applicant: BSH Hausgeräte GmbH, 81739 München (DE)
(72) Inventor: Ellwitz, Tom, 74549 Wolpertshausen (DE); Etzbach, Andrea, 80634 München (DE); Sagoo, Kiran Pal, 82256 Fürstenfeldbruck (DE); Graus Almenar, Javier, 50002 Zaragoza (ES)

(57) **Abstract**

An electronic device (100) is described. The electronic device (100) comprises a main body (106) extending along a longitudinal axis which is parallel to a ground that the electronic device (100) is standing on. The main body (106) comprises one or more speaker drivers (108) for rendering an audio signal. The electronic device (100) further comprises one or more feet (105, 111) extending downwards from the main body (106) and configured to hold the main body (106) elevated at an elevation distance from the ground. Furthermore, the electronic device (100) comprises a gesture sensor (104) which is positioned in the main body (106) and which is configured to capture a gesture signal regarding a gesture performed within an effective field of view (303) of the gesture sensor (104), wherein the gesture sensor (104) is positioned such that the effective field of view (303) extends into a main sensing direction (305) towards a user that is placed in front of the electronic device (100). In addition, the electronic device (100) comprises a control unit (120) configured to control the electronic device (100) or a user device which is coupled with the electronic device (100) based on the gesture signal.

## Description

The present document relates to an electronic device, notably to a (smart) docking unit or docking station, which may be used within a household, notably within a kitchen, e.g., to provide support for cooking.

An electronic device, notably a docking station, may be used within a household, notably within a kitchen, to provide support for a household task, such as cooking, to a user of the electronic device. The user may use the electronic device for playing back an audio signal (e.g., music or audio instructions for a recipe or an answer by a voice assistant). The audio signal can be streamed directly from the internet via WLAN (e.g., a voice assistant answer or music streaming) or may be transmitted via Bluetooth from a smart device, notably a smartphone or a tablet PC, to the smart electronic device.

The present document addresses the technical problem of increasing the comfort of use of an electronic device such as a docking station, notably with respect to the quality and/or the reliability of a user interaction with the electronic device. The technical problem is solved by each one of the independent claims. Preferred examples are described in the dependent claims.

According to an aspect, an electronic device, notably a docking station for a handheld user device (e.g., for a smartphone or for a tablet PC), is described. The electronic device may be designed to be placed on a table or a worktop within a kitchen. Furthermore, the electronic device, notably the docking station, may be configured to hold a DIN A4 or DIN A5 sized user device (e.g., with a display size of up to 11 inches or 12 inches).

As a standalone device, the electronic device may be configured to act as a smart speaker. In combination with a smart user device (e.g., a smartphone or tablet PC), the electronic device may be used as a Bluetooth speaker. By placing a smart user device in the holder of the electronic device, the electronic device may act as a smart display device.

The electronic device, notably the docking station, may be configured to communicate with a user device which is placed into a holder of the electronic device, notably for rendering an audio signal provided by the user device and/or provided from an internet streaming platform. The audio signal may be rendered using one or more (loud-) speakers or speaker drivers of the electronic device.

In particular, the electronic device, notably the docking station, may comprise a control unit which is configured to determine whether or not a user device has been placed in conjunction with, notably into (the holder of), the electronic device. For this purpose, the electronic device may comprise one or more presence sensors (e.g., a weight sensor) which are configured to detect the presence of a user device, notably the presence of a user device in the holder of the electronic device. The holder of the electronic device may comprise a back support for the user device.

The control unit of the electronic device may be configured to automatically establish a communication link with the user device, if it is determined that the user device has been placed in conjunction with, notably into the holder of, the electronic device. By way of example, a wireless communication link, such as a Bluetooth link, may be established between the electronic device and the user device.

Furthermore, the control unit may be configured to receive an audio signal from the user device via the communication link and/or from an internet streaming platform, and to cause one or more speaker drivers of the electronic device to render the audio signal that has been received from the user device and/or from the internet streaming platform. Hence, the electronic device may be configured to enable a comfortable interaction of a user with a user device or with an internet streaming platform. The selection and/or the rendering of an audio signal may be controlled using a hand and/or air gesture and/or a voice command, as outlined within the present document.

The electronic device comprises a main body, wherein the main body may exhibit a (circular) cylindrical form. The main body may exhibit a longitudinal axis which may be oriented in parallel to the ground (e.g., the worktop) onto which the electronic device is placed. The main body may have a diameter between 4cm and 8cm. Furthermore, the main body may have a length along the longitudinal axis between 10cm and 25cm.

In addition, the electronic device may comprise one or more feet extending downwards from the main body and enabling the main body to be placed on the ground (e.g., on a worktop). The one or more feet may extend along the longitudinal axis of the main body (e.g., from one end to the other end of the main body). The electronic device may exhibit a front foot at a front side of the electronic device (facing the user of the electronic device, when the user is using the electronic device). Alternatively, or in addition, the electronic device may exhibit a rear foot (at the rear side of the electronic device). By providing one or more feet, the electronic device may be placed on a ground in a stable manner.

The one or more feet may be configured to hold the main body elevated at an elevation distance from the ground. The elevation distance may be between 1cm and 15cm. By positioning the main body (which may comprise one or more speaker drivers) at a certain elevation distance from the ground, an electronic device having a high audio quality and intelligibility and usability may be provided.

As indicated above, the (elevated) main body may comprise one or more (active or passive) speaker drivers for rendering an audio signal. The one or more speaker drivers may be oriented at least partially towards the ground. In particular, the one or more speaker drivers may be arranged such that a main emission direction of an audio signal that is emitted by the one or more speaker drivers is oriented towards the ground. By way of example, the main emission direction of the audio signal may form an angle with the ground having a magnitude which is greater than 0°, notably greater than 20°.

By providing an electronic device having an elevated main body with one or more speaker drivers that are oriented towards the ground that the electronic device is standing on, the quality and the intelligibility of emitted audio signals may be increased, thereby increasing the comfort of use of the electronic device.

As indicated above, the electronic device typically comprises a holder, notably a back support, extending upwards from the main body and enabling a user device to be placed in conjunction with and/or onto the electronic device. The holder may exhibit an angle between 45° and 75° relative to the ground that the electronic device is standing on. The holder may form a flat backplane which is at least partially in contact with the backside of a (flat) user device that is placed in the holder of the electronic device. In other words, the holder, notably the back support, may hold a user device from the back.

The electronic device may comprise a gesture sensor which is positioned in the main body and which is configured to capture a gesture signal regarding a hand and/or air gesture performed within an effective field of view of the gesture sensor. The gesture may be performed by a user facing the front side of the electronic device, e.g., using a hand. The gesture sensor may be an infrared-based and/or an ultrasonic-based gesture sensor. The gesture sensor may be positioned within a section of the main body that is facing a user of the electronic device.

The gesture sensor may be positioned such that the effective field of view extends into a main sensing direction towards the user that is placed in front of the electronic device. The main sensing direction may run parallel to the ground that the electronic device is placed on. Alternatively, the main sensing direction may exhibit a certain angle (e.g., 20° or less, in particular 15.5°) with regards to the ground. Hence, the main sensing direction may slightly point upwards towards the user placed in front of the electronic device. As a result of this, gestures may be captured in a reliable manner.

The control unit may be configured to control the electronic device or a user device which is coupled with the electronic device based on the gesture signal (via the communication link). In particular, the control unit may be configured to determine based on the gesture signal, which gesture out of a plurality of different gestures has been performed by the user. The plurality of different gestures may be associated with a corresponding plurality of control commands (e.g., within a mapping table). The control unit may determine the control command based on the determined gesture (e.g., using the mapping table). Furthermore, the control unit may control the electronic device or the user device in dependence of the control command. As a result of this, the electronic device and/or a user device may be controlled in a reliable and comfortable manner.

The gesture sensor may be positioned at a sensor height (e.g., between 4cm and 6cm) relative to the ground. The main sensing direction may extend away from the main body at the sensor height or starting at the sensor height, wherein the height may increase with increasing distance from the main body. As a result of this, gestures may be captured in a particularly reliable manner.

The effective field of view may be bound by an upper limit above the main sensing direction and a lower limit below the main sensing direction. The upper limit may be closer to the main sensing direction than the lower limit. Alternatively, or in addition, a larger portion of the effective field of view may be located below the main sensing direction than above the main sensing direction.

In particular, the effective field of view of the gesture sensor may be designed such that the effective field of view has a limited height with regards to the ground, such that a user interacting with the user device that is placed in conjunction with the electronic device (notably that is placed in the holder) does not interfere with the effective field of view of the gesture sensor.

The set of all possible perpendicular rays which are perpendicular to the holder of the electronic device and which extend towards a user facing the electronic device may be considered. The effective field of view of the gesture sensor may be such that the effective field of view does not interfere with any of the perpendicular rays from the set of all possible perpendicular rays. As a result of this, false positive gesture detections may be avoided in a particularly reliable manner (when a user interacts with a user device placed on the holder of the electronic device).

The effective field of view of the gesture sensor may have a limited extension away from the gesture sensor of 25 cm or less or of 20 cm or less. In other words, gesture detection may be limited to a distance of 25 cm or less or 20 cm or less from the front face of the electronic device. As a result of this, false positive gesture detections may be avoided in a reliable manner.

The main body may comprise an LED strip with one or more LEDs (e.g., for indicating status information regarding a status of the electronic device). The LED strip may be facing a user placed in front of the electronic device. The gesture sensor may be hidden within the LED strip, thereby providing a particularly compact electronic device.

The gesture sensor may have a complete field of view which is greater than the effective field of view. In particular, the effective field of view may be a subset of the complete field of view. The control unit may be configured to limit processing of measurement data of the gesture sensor to measurement data which is associated with the effective field of view (thereby ignoring measurement data of the gesture sensor, which is associated with areas that lie outside of the effective field of view). Hence, the limitation of the gesture sensor to an effective field of view may be achieved in an efficient manner by ignoring measurement data that falls outside of the effective field of view.

Alternatively, or in addition to a gesture sensor, the electronic device may comprise a microphone array comprising a plurality of microphones configured to capture a microphone signal. One or more of the plurality of microphones may have a directionality pattern which is at least partially oriented away from the ground that the electronic device is standing on.

The control unit may be configured to control the electronic device or the user device which is coupled with the electronic device based on the microphone signal (via the communication link). In particular, the control unit may be configured to analyze the microphone signal of the plurality of microphones to enable a speech or voice control of the electronic device and/or of the user device.

By providing one or more microphones which are oriented away from the one or more speaker drivers of the main body, the degree of interference of an audio signal which is rendered by the one or more speaker drivers with the one or more microphones may be reduced, thereby increasing the reliability for voice control of the electronic device.

One or more of the plurality of microphones, notably a subarray of two or more microphones, may be positioned at a top section of the main body and/or may have a main directionality which is pointing at an angle between 80° and 100°, notably at an angle of 90°, away from the ground. Alternatively, or in addition, one or more of the plurality of microphones, notably a subarray of two or more microphones, may be positioned at a section of the main body facing a user of the electronic device and/or may have a main directionality which is pointing at an angle between 15° and 35°, notably at an angle of 25.5°, away from the ground (towards the user in front of the electronic device). As a result of this, the reliability of voice control may be improved.

It should be noted that the methods and systems including its preferred embodiments as outlined in the present document may be used stand-alone or in combination with the other methods and systems disclosed in this document. In addition, the features outlined in the context of a system are also applicable to a corresponding method. Furthermore, all aspects of the methods and systems outlined in the present document may be arbitrarily combined. In particular, the features of the claims may be combined with one another in an arbitrary manner.

The invention is explained below in an exemplary manner with reference to the accompanying drawings, wherein
Figure 1a shows a (smart) docking station as an example for an electronic device in a perspective view;
Figure 1b shows an example docking station in a side view;
Figures 2a to 2d show different views of a docking station comprising a gesture sensor and/or a microphone array;
Figure 3a illustrates a positioning of a microphone array; and
Figure 3b illustrates a positioning of a gesture sensor.

As outlined above, the present document is directed at increasing the comfort of use (in particular with regards to the reliability and/or the robustness of a user input) of an electronic device, notably of a docking station. In the following, an example docking station is described, which may be configured to be coupled to a user device, such as a smartphone or tablet PC. It should be noted that the aspects which are outlined in the present document are applicable to an electronic device, such as a smart speaker, in general.

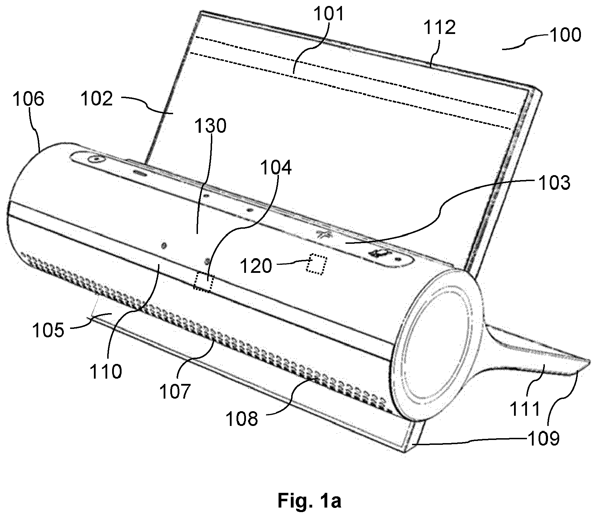

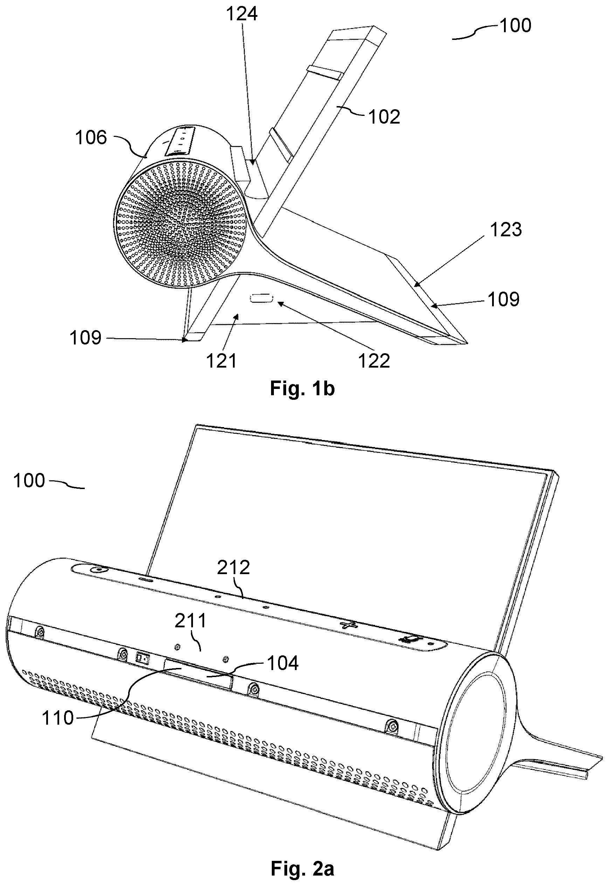

Figs. 1a and 1b show an example docking station 100. The (smart) docking station 100 comprises a main body 106 which may have a cylindrical form as illustrated in Fig. 1a. The main body 106 may comprise one or more electronic components such as a control unit 120, e.g., a microcontroller, of the docking station 100. Furthermore, the main body 106 may comprise a control panel 103 with one or more control elements, notably control buttons. The control panel 103 may enable a user to interact with the docking station 100, e.g., for speaker volume control or for quick touch interaction with a voice assistant (stop listening, start listening).

Alternatively, or in addition to a control panel 103, the docking station 100 may comprise a gesture sensor 104 (located e.g., on the main body 106), which is configured to sense a gesture signal regarding a (hand and/or air) gesture performed by a user of the docking station 100. The docking station 100 and/or a user device which is coupled with the docking station 100 may be controlled in dependence of the gesture signal. In addition, the docking station 100 may comprise one or more light elements 110, notably light emitting diodes (LED), e.g., for providing status information regarding the status of the docking station 100 to a user of the docking station 100.

Alternatively, or in addition, the docking station 100 may comprise one or more microphones, notably a microphone array, 130 (located e.g., on the main body 106), which are configured to capture a microphone signal regarding an audio signal, notably a speech signal, generated by a user of the docking station 100. The docking station 100 and/or a user device which is coupled with the docking station 100 may be controlled in dependence of the microphone signal.

The main body 106 may further comprise one or more active speaker drivers (which are also referred to herein as loudspeakers) 108 which are configured to emit an audio signal. The one or more loudspeakers 108 may be located at a face side and/or at a shell surface of the (cylindrical) main body 106 or of the (cylindrical) acoustic chamber comprised within the main body 106. The main body 106 may act as and/or may enclose an acoustic chamber for improving the sound quality of the one or more loudspeakers 108. In addition, the docking station 100 may comprise one or more (passive) acoustic radiators 107 on the (cylindrical) surface of the main body 106 and/or at the one or more face sides of the main body 106.

The docking station 100 may comprise one or more base feet 105, 111, notably a front foot 105 at a front side facing the user and/or a rear foot 111 at a rear side of the docking station 100. The one or more base feet 105, 111 may be attached to the main body 106, and may extend from the main body 106 towards the ground, onto which the docking station 100 is placed. The one or more base feet 105, 111 may extend along the longitudinal axis of the (cylindrical) main body 106. In particular, the feet 105, 111 may have the form of a plate. As such the feet 105, 111 may be referred to herein as foot plates.

The one or more base feet 105, 111 may each comprise an isolator element 109, e.g. comprising silicone, at the end of the respective foot 105, 111, which is in contact with the ground that the docking station 100 is placed on. The use of an isolator element 109 allows the docking station 100 to be placed in a stable manner, preventing it from sliding over the surface that the docking station 100 is placed on (notably in case of touch interaction with the docking station 100 and/or when audio is played back). Furthermore, the docking station 100 may be isolated against (acoustic) vibrations.

In addition, the docking station 100 may comprise a holder, notably a back support, 102 which extends from the main body 106 upwards (i.e., away from the ground that the docking station 100 is placed on). The back support 102 may exhibit an angle with regards to the ground between 45° and 75°, when the docking station 100 is placed on the ground. The back support 102 may be designed as a support for a typical tablet PC (e.g., with a screen size between 8 inches and 13 inches), also being able to support smaller user devices such as phones starting at 5 inches. The back support 102 may extend along the longitudinal axis of the main body 106 (from one face to the other face of the main body 106).

The back support 102 may exhibit one or more isolator stripes 101 which may extend horizontally across the back support 102. Furthermore, the back support 102 may comprise an isolator section 112 at the top end of the back support 102. The use of isolator stripes 101 and/or of an isolator section 112 allows an object, such as a tablet PC, to be placed onto the back support 102 in a stable manner. Furthermore, isolation of acoustic vibrations may be provided.

In addition, the docking station 100 may comprise a base support 124, as shown in Fig. 1b, which is located at the contact point between the main body 106 and the back support 102. The base support 124 may form a gap within which the lower edge of a user device, notably of a tablet PC, may be placed, in order to hold the user device in a stable manner on the back support 102. The base support 124 may comprise an isolating material, in order to allow vibrations of the docking station 100 (e.g., due to rending of an audio signal via a loudspeaker 108 of the docking station 100) to be isolated. Alternatively, or in addition, the base support 124 may comprise one or more presence sensors (e.g., weight sensors) for detecting the presence of a user device on the back support 102.

Figure 1b shows a side view of the docking station 100. The docking station 100 may comprise a housing 121 for one or more electronic components (e.g., for the control unit 120). The housing 121 may be located between the front foot 105 and the rear foot 111 of the docking station 100. Furthermore, the docking station 100 may comprise a data and/or power interface 122 (e.g., a USB interface) for data communication and/or for power supply (e.g., at the housing 121). In addition, the docking station 100 may comprise a section 123 for placing a power cord for a power supply of the docking station 100.

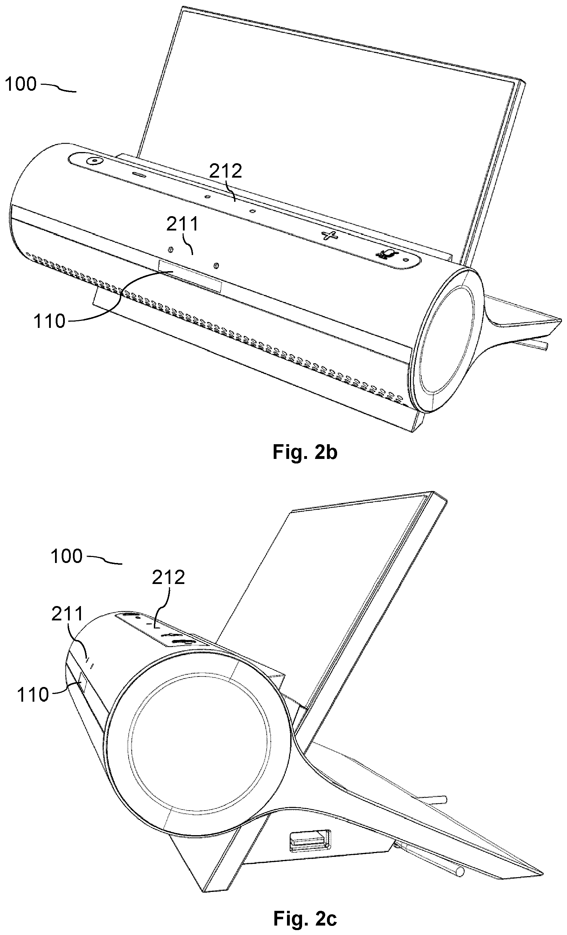

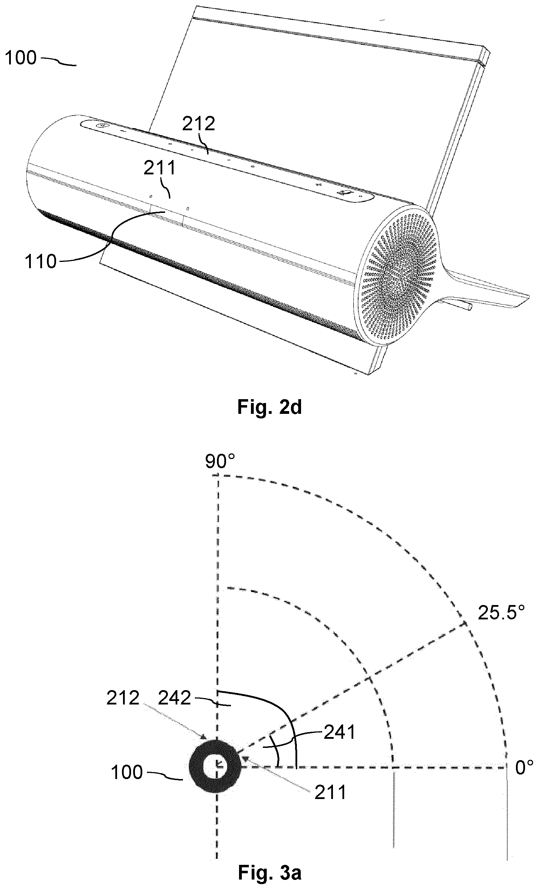

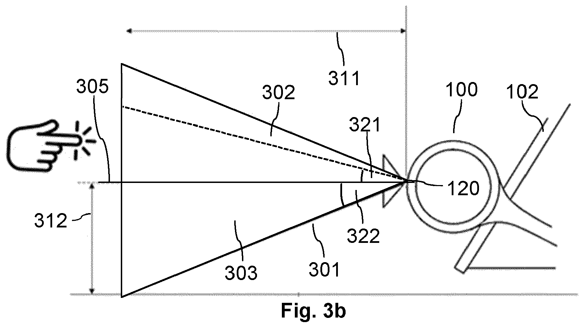

As outlined above, the docking station 100, notably the main body 106 of the docking station 100, may comprise a gesture sensor 104 and/or one or more microphones 130. Figs. 2a to 2d show preferred placements of the gesture sensor 104 and/or of the one or more microphones, notably the microphone array, 130 on the main body 106. Furthermore, Fig. 3a illustrates a preferred placement of a microphone array 130 and Fig. 3b illustrates a preferred placement of a gesture sensor 104.

As shown in Fig. 2a, the gesture sensor 104 may be located at the LED strip 110, notably behind the LED strip 110, e.g., such that the gesture sensor 104 is hidden by the LED strip 110. As illustrated in Fig. 3b, the gesture sensor 104 may have a certain field of view (FOV) 301, which is located in front of the main body 106 and which may extend away from the main body 106 up to a certain maximum distance 311. The gesture sensor 104 may have a main sensing direction 305 which is parallel to the ground that the docking station 100 is standing on, or which is slightly pointing upwards (e.g., at an angle of 15.5° with respect to the ground). The main sensing direction 305 may be located at a certain height 312 from the ground that the docking station 100 is standing on.

The total FOV 301 may be limited to a reduced, effective, FOV 303 (e.g., by ignoring an upper portion 302 of the total FOV 301). The effective FOV 303 of the gesture sensor 104 may extend at a certain upper angle 321 upwards and at a certain lower angle 322 downwards from the main sensing direction 305. In a preferred example, the upper angle 321 is relatively small, in order to limit the extension of the effective FOV 303 in the upward direction. In particular, the effective FOV 303 of the gesture sensor 104 may be such that the upper angle 321 is smaller than the lower angle 322, such that the effective FOV 303 of the gesture sensor 104 does not interfere with the movements that a user performs when interacting with a user device that is placed on the back support 102 of the docking station 100. For this purpose, an upper section 302 of the total FOV 301 of the gesture sensor 104 may be ignored when determining the gesture signal regarding a hand gesture of a user. By doing this, a gesture signal may be captured in a reliable manner for enabling a robust control of the docking station 100 and/or of a user device which is coupled with the docking station 100.

The microphone array 130 of the docking station 110 may comprise a first array 211 with two or more microphones and a second array 212 with two or more microphones. Fig. 3a illustrates preferred placements of the arrays 211, 212 on the main body 106. In particular, the first array 211 may be placed at a first angle 241 with regards to the horizontal axis which is at or in the range of 25.5°. The second array 212 may be placed at a second angle 242 with regards to the horizontal axis which is at or in the range of 90°.

In an alternative example, the microphone array 130 may comprise a single array with four or more microphones which are placed at the second angle 242 with regards to the horizontal axis. This placement of the microphones allows for a particularly reliable sensing of a microphone signal for speech control of the docking station 100 and/or of a user device that is coupled with the docking station 100.

Hence, a smart docking station 100 for smartphones and tablet PC and/or a standalone smart speaker 100 is described. When a user places a user device onto the docking station 100, the user device and the docking station 100 are connected automatically, thereby converting into a smart display. The smart docking station 100 may be configured to provide an improved experience both standalone and with a docked user device. A gesture sensor 104 may be placed inside the smart docking station 100 to enable touch free interaction with the content of a user device or with the smart docking station 100. The gesture sensor 104 may be placed such that false positives are avoided and such that screen visibility of the screen of the user device is ensured. The gesture sensor 104 may be placed behind the LED strip 110, e.g., next to one or more LEDs of the LED strip 110 on the main body 106.

The docking station 100 may comprise a microphone array 130 for voice interaction. Different configurations may be used in conjunction with different voice recognition algorithms. A microphones array 212 comprising four microphones may be placed at the top of the acoustic chamber of the main body 106 of the docking station 100 at 90° with respect to ground. An alternative configuration comprises a two-by-two matrix of microphones, wherein two microphones may be placed at 90° with regards to ground and two microphones may be placed at 25.5° with regards to ground on the acoustic chamber of the main body 106. As a result of this, a particularly reliable voice interaction may be achieved.

Hence, the docking station 100 may comprise a gesture sensor 104 which is placed behind an LED strip 110 to obscure the gesture sensor 104 from the user. The gesture sensor 104 may be placed next to the LEDs of the LED strip 110. As shown in Fig. 3b, an upper portion 302 of the FOV 301 of the gesture sensor 104 may be ignored, in order to avoid false positives in a reliable manner. Furthermore, the maximum sensing distance 311 of the gesture sensor 104 may be limited (e.g., to 15cm) in order to avoid false positives (e.g., caused by the user passing in front of the docking station 100).

The placement of the microphone array 130 and/or of the gesture sensor 104 allows for a reliable and intuitive user interaction, even in a noisy environment.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. An electronic device (100), the electronic device (100) comprising
- a main body (106) extending along a longitudinal axis which is parallel to a ground that the electronic device (100) is standing on; wherein the main body (106) comprises one or more speaker drivers (107, 108) for rendering an audio signal;
- one or more feet (105, 111) extending downwards from the main body (106) and configured to hold the main body (106) elevated at an elevation distance from the ground;
- a gesture sensor (104) which is positioned in the main body (106) and which is configured to capture a gesture signal regarding a gesture performed within an effective field of view (303) of the gesture sensor (104); wherein the gesture sensor (104) is positioned such that the effective field of view (303) extends into a main sensing direction (305) towards a user that is placed in front of the electronic device (100); and
- a control unit (120) configured to control the electronic device (100) or a user device which is coupled with the electronic device (100) based on the gesture signal.

2. The electronic device (100) of claim 1, wherein
- the gesture sensor (104) is positioned at a sensor height (312) relative to the ground; and
- the main sensing direction (305) extends away from the main body (106) at the sensor height (312).

3. The electronic device (100) of claim 2, wherein
- the effective field of view (303) is bound by an upper limit above the main sensing direction (305) and a lower limit below the main sensing direction (305); and
- the upper limit is closer to the main sensing direction (305) than the lower limit.

4. The electronic device (100) of any of claims 2 to 3, wherein a larger portion of the effective field of view (303) is located below the main sensing direction (305) than above the main sensing direction (305).

5. The electronic device (100) of any previous claims, wherein
- the electronic device (100) comprises a holder (102), notably a back support extending upwards from the main body (106), enabling a handheld user device to be placed in conjunction with the electronic device (100);
- the holder (102) forms a support plane that exhibits a support angle, notably a support angle between 45° and 70°, with respect to the ground; and
- the effective field of view (303) of the gesture sensor (104) has a limited height with regards to the ground, such that a user interacting with the user device that is placed in conjunction with the electronic device (100) does not interfere with the effective field of view (303) of the gesture sensor (104).

6. The electronic device (100) of any previous claims, wherein the effective field of view (303) of the gesture sensor (104) has a limited extension away from the gesture sensor (104) of 20 cm or less.

7. The electronic device (100) of any previous claims, wherein
- the main body (106) comprises an LED strip (110) with one or more LEDs; and
- the gesture sensor (104) is hidden within the LED strip (110).

8. The electronic device (100) of any previous claims, wherein
- the electronic device (100) comprises a microphone array (130) comprising a plurality of microphones configured to capture a microphone signal;
wherein one or more of the plurality of microphones have a directionality pattern which is at least partially oriented away from the ground; and
- the control unit (120) is configured to control the electronic device (100) or the user device which is coupled with the electronic device (100) based on the microphone signal.

9. An electronic device (100), the electronic device (100) comprising
- a main body (106) extending along a longitudinal axis which is parallel to a ground that the electronic device (100) is standing on; wherein the main body (106) comprises one or more speaker drivers (107, 108) for rendering an audio signal; wherein the one or more speaker drivers (108, 107) are at least partially oriented towards the ground;
- one or more feet (105, 111) extending downwards from the main body (106) and configured to hold the main body (106) elevated at an elevation distance from the ground;
- a microphone array (130) comprising a plurality of microphones configured to capture a microphone signal; wherein one or more of the plurality of microphones have a directionality pattern which is at least partially oriented away from the ground; and
- a control unit (120) configured to control the electronic device (100) or a user device which is coupled with the electronic device (100) based on the microphone signal.

10. The electronic device (100) of claim 9, wherein one or more of the plurality of microphones, notably a subarray (212) of two or more microphones, are positioned at a top section of the main body (106) and/or have a main directionality which is pointing at an angle (242) between 80° and 100°, notably of 90°, away from the ground.

11. The electronic device (100) of any of claims 9 to 10, wherein one or more of the plurality of microphones, notably a subarray (211) of two or more microphones, are positioned at a section of the main body (106) facing a user of the electronic device and/or have a main directionality which is pointing at an angle (241) between 15° and 35°, notably of 25.5°, away from the ground.

12. The electronic device (100) of any previous claims, wherein the control unit (120) is configured to
- determine whether or not a user device has been placed in conjunction with the electronic device (100); and
- automatically establish a communication link with the user device, if it is determined that the user device has been placed into the electronic device (100).

13. The electronic device (100) of claim 12, wherein the control unit (120) is configured to,
- receive an audio signal from the user device via the communication link and/or from an internet streaming platform; and
- cause the one or more speaker drivers (108) to render the audio signal that has been received from the user device and/or from the internet streaming platform.

14. The electronic device (100) of any of claims 12 to 13, wherein the control unit (120) is configured to control the user device based on the gesture signal and/or the microphone signal via the communication link.

15. The electronic device (100) of any previous claims, wherein
- the main body (106) forms a cylinder, notably a circular cylinder, around the longitudinal axis; and/or
- the main body (106) extends between 10cm and 25cm along the longitudinal axis; and/or
- the main body (106) exhibits a diameter between 4cm and 8cm; and/or
- the elevation distance is between 1cm and 7cm.

## Amended claims

### Amended claims in accordance with Rule 137(2) EPC.

1. An electronic device (100), the electronic device (100) comprising
- a main body (106) extending along a longitudinal axis which is parallel to a ground that the electronic device (100) is standing on; wherein the main body (106) comprises one or more speaker drivers (107, 108) for rendering an audio signal; wherein the one or more speaker drivers (108, 107) are at least partially oriented towards the ground;
- one or more feet (105, 111) extending downwards from the main body (106) and configured to hold the main body (106) elevated at an elevation distance from the ground;
- a microphone array (130) comprising a plurality of microphones configured to capture a microphone signal; wherein one or more of the plurality of microphones have a directionality pattern which is at least partially oriented away from the ground; and
- a control unit (120) configured to control the electronic device (100) or a user device which is coupled with the electronic device (100) based on the microphone signal;
**characterized in that**
- the electronic device (100) comprises a holder (102), notably a back support extending upwards from the main body (106), enabling a handheld user device to be placed in conjunction with the electronic device (100);
- wherein the holder (102) forms a support plane that exhibits a support angle between 45° and 70° with respect to the ground;
- wherein one or more of the plurality of microphones are positioned at a top section of the main body (106) and have a main directionality which is pointing at an angle (242) between 80° and 100° away from the ground; and
- wherein one or more of the plurality of microphones are positioned at a section of the main body (106) facing a user of the electronic device and have a main directionality which is pointing at an angle (241) between 15° and 35° away from the ground.

2. The electronic device (100) of claim 1, the electronic device (100) further comprising
a. a gesture sensor (104) which is positioned in the main body (106) and which is configured to capture a gesture signal regarding a gesture performed within an effective field of view (303) of the gesture sensor (104); wherein the gesture sensor (104) is positioned such that the effective field of view (303) extends into a main sensing direction (305) towards a user that is placed in front of the electronic device (100);
b. wherein the control unit (120) is further configured to control the electronic device (100) or a user device which is coupled with the electronic device (100) based on the gesture signal.

3. The electronic device (100) of claim 2, wherein
a. the gesture sensor (104) is positioned at a sensor height (312) relative to the ground; and
b. the main sensing direction (305) extends away from the main body (106) at the sensor height (312).

4. The electronic device (100) of claim 3, wherein
a. the effective field of view (303) is bound by an upper limit above the main sensing direction (305) and a lower limit below the main sensing direction (305); and
b. the upper limit is closer to the main sensing direction (305) than the lower limit.

5. The electronic device (100) of any of claims 3 to 4, wherein a larger portion of the effective field of view (303) is located below the main sensing direction (305) than above the main sensing direction (305).

6. The electronic device (100) of any previous claims 2 to 5, wherein
a. the effective field of view (303) of the gesture sensor (104) has a limited height with regards to the ground, such that a user interacting with the user device that is placed in conjunction with the electronic device (100) does not interfere with the effective field of view (303) of the gesture sensor (104).

7. The electronic device (100) of any previous claims 2 to 6, wherein the effective field of view (303) of the gesture sensor (104) has a limited extension away from the gesture sensor (104) of 20 cm or less.

8. The electronic device (100) of any previous claims 2 to 7, wherein
a. the main body (106) comprises an LED strip (110) with one or more LEDs; and
b. the gesture sensor (104) is hidden within the LED strip (110).

9. The electronic device (100) of any previous claims, wherein a subarray (212) of two or more microphones is positioned at a top section of the main body (106) and/or has a main directionality which is pointing at an angle (242) of 90° away from the ground.

10. The electronic device (100) of any previous claims, wherein a subarray (211) of two or more microphones is positioned at a section of the main body (106) facing a user of the electronic device and/or has a main directionality which is pointing at an angle (241) of 25.5° away from the ground.

11. The electronic device (100) of any previous claims, wherein the control unit (120) is configured to
a. determine whether or not a user device has been placed in conjunction with the electronic device (100); and
b. automatically establish a communication link with the user device, if it is determined that the user device has been placed into the electronic device (100).

12. The electronic device (100) of claim 11, wherein the control unit (120) is configured to,
a. receive an audio signal from the user device via the communication link and/or from an internet streaming platform; and
b. cause the one or more speaker drivers (108) to render the audio signal that has been received from the user device and/or from the internet streaming platform.

13. The electronic device (100) of any of claims 11 to 12, wherein the control unit (120) is configured to control the user device based on the gesture signal and/or the microphone signal via the communication link.

14. The electronic device (100) of any previous claims, wherein
a. the main body (106) forms a cylinder, notably a circular cylinder, around the longitudinal axis; and/or
b. the main body (106) extends between 10cm and 25cm along the longitudinal axis; and/or
c. the main body (106) exhibits a diameter between 4cm and 8cm; and/or
d. the elevation distance is between 1cm and 7cm.
